# EUROPEAN PATENT APPLICATION

(11) **EP 4 358 174 A1**
(43) Date of publication of application: **24.04.2024**
(21) Application number: 22918239.9
(22) Date of filing: 08.10.2022
(51) Int. Cl.: H01M 4/13

(54) **ELECTRODE SHEET, ELECTRODE ASSEMBLY, BATTERY CELL, BATTERY AND ELECTRIC APPARATUS**

(30) Priority: 07.01.2022 CN 202210018401
(71) Applicant: Contemporary Amperex Technology Co., Limited, Ningde, Fujian 352100 (CN)
(72) Inventor: WEN, Yaoling, Ningde, Fujian 352100 (CN)
(74) Representative: Ran, Handong
(86) International application number: PCT/CN2022/123879
(87) International publication number: WO 2023/130785

(57) **Abstract**

Disclosed in the present application are an electrode sheet, an electrode assembly, a battery cell, a battery, and an electric apparatus. The electrode sheet comprises: a body part, at least part of the surface of the body part being coated with an active substance; a tab part, arranged on at least one side of the body part, and connected to the body part; and an opening, passing through the tab part in the thickness direction of the tab part, and provided with a first end and a second end. The first end and the second end are sequentially arranged in the direction away from the body part; and the opening extends from the first end to the second end along a preset route. In a production and manufacturing process of the electrode sheet provided by the embodiment of the application, a folding phenomenon of the tab part can be reduced, so that the tab part is prevented from being insufficient in overcurrent area, and thus when a battery cell is charged and discharged, heat generated by the tab part is reduced and the safety performance of the battery cell is improved. As the folding phenomenon of the tab part is reduced, the tab part and the body part of the electrode sheet can be prevented from being overlapped with each other, the capacity of the battery cell is prevented from being reduced, and the probability of short circuit of the battery cell is reduced.

## Description

### CROSS-REFERENCE TO RELATED APPLICATION

This application claims priority to Chinese Patent Application No. 202210018401.4, titled "ELECTRODE PLATE, ELECTRODE ASSEMBLY, BATTERY CELL, BATTERY AND ELECTRIC DEVICE," and filed on January 7, 2022, the entire contents of which are incorporated herein by reference.

### TECHNICAL FIELD

The present disclosure relates to the field of new energy technologies, and more particularly, to an electrode plate, an electrode assembly, a battery cell, a battery, and an electric device.

### BACKGROUND

Energy saving and emission reduction is a key to the sustainable development of the automobile industry, and electric vehicles have become an important part of the sustainable development of the automobile industry due to their energy saving and environmental protection advantages. For electric vehicles, the battery technology is an important factor for its development.

Currently, during manufacturing of an electrode plate in a battery cell, a tab portion of the electrode plate is prone to be folded. When the tab portion is folded, a welding area of the tab portion will be reduced, resulting in an insufficient overcurrent area of the tab portion. Therefore, when a battery cell is charged or discharged, heat generated by the tab portion is large, resulting in a reduction in safety performance of the battery cell. In addition, when the tab portion is folded, if the tab portion and a body portion of the electrode plate overlap with each other, a capacity of the battery cell will be reduced, which would easily result in a short circuit of the battery cell.

### SUMMARY

In view of the above problems, embodiments of the present disclosure provide an electrode plate, an electrode assembly, a battery cell, a battery, and an electric device, which can reduce occurrence of folding of a tab portion of the electrode plate during manufacturing, avoiding an insufficient overcurrent area of the tab portion. As a result, it is possible to reduce heat generated by the tab portion during charging or discharging of a battery cell, improving safety performance of the battery cell. In addition, when the occurrence of the folding of the tab portion is reduced, it is possible to prevent the tab portion and the body portion of the electrode plate from overlapping with each other, thereby avoiding reduction in capacity of the battery cell and reducing probability of short circuit of the battery cell.

In a first aspect, embodiments of the present disclosure provide an electrode plate. The electrode plate includes: a body portion having a surface at least partially coated with an active material; a tab portion arranged on at least one side of the body portion and connected to the body portion; and an opening penetrating the tab portion in a thickness direction of the tab portion. The opening has a first end and a second end that are sequentially arranged away from the body portion. The opening extends from the first end to the second end along a predetermined path.

In the electrode plate according to the embodiments of the present disclosure, the opening penetrates the tab portion in the thickness direction of the tab portion, and has the first end and the second end that are sequentially arranged away from the body portion. The opening extends from the first end to the second end along the predetermined path. Such a design enables the electrode plate to generate an elastic deformation at the opening when the tab portion generates a folding stress during manufacturing, and the occurrence of the folding of the tab portion is reduced, which avoids an insufficient overcurrent area of the tab portion. Further, in a battery cell using the electrode plate, it is possible to reduce the heat generated by tab portion during charging or discharging. As a result, safety performance of the battery cell can be enhanced. A folding stress at a surface of the tab portion can also be released at the opening to avoid creases from being formed at the surface of the tab portion. In addition, when the occurrence of rotation of the tab portion is reduced, the tab portion and the body portion of the electrode plate can be prevented from overlapping with each other. Therefore, it is possible to prevent the capacity of the battery cell from being reduced and to reduce a probability of the short circuit of the battery cell.

In some embodiments, the opening extends to an edge of the tab portion away from the body portion along the predetermined path. In this way, a part of the tab portion located at the first end away from the body portion can be more easily elastically deformed. Further, different parts of the part of the tab portion located on two sides of the opening can be more easily elastically deformed to different degrees, which further reduces the occurrence of the folding of the tab portion when the electrode plate passes through a roller.

In some embodiments, a first spacing is formed between the opening and the body portion. In this way, it is possible to prevent the opening from being too large, which would cause a part of the tab portion close to the body portion to be divided into two independent sheets by the opening, which affects rigidity of the tab portion.

In some embodiments, a second spacing is formed between the edge of the tab portion away from the body portion and the body portion. The first spacing is greater than or equal to one quarter of the second spacing and less than or equal to three quarters of the second spacing. In this way, since the first spacing is greater than or equal to one quarter of the second spacing, it is possible to prevent the part of the tab portion close to the body portion from being divided into two independent sheets by the opening. In addition, since the first spacing is less than or equal to three quarters of the second spacing, it is possible to ensure that when the tab portion is subjected to the folding stress and/or the bending stress, the folding stress and/or the bending stress can be released at the opening of the tab portion.

In some embodiments, the tab portion is arranged on at least one side of the body portion in a first direction. The first end and the second end are sequentially arranged in a direction perpendicular to the first direction. In this way, the influence of the opening on the rigidity of the tab portion in a direction perpendicular to the first direction can be avoided.

In some embodiments, the predetermined path is configured to be perpendicular to the first direction. In this way, a dimension of the opening in the first direction can be reduced, avoiding the influence of the opening on the rigidity of the tab portion in the direction perpendicular to the first direction.

In some embodiments, the tab portion is arranged on at least one side of the body portion in the first direction, and has a first side edge and a second side edge opposite to the first side edge in the first direction. In the first direction, a minimum spacing between the first end and the first side edge is a third spacing, a minimum spacing between the first end and the second side edge is a fourth spacing, and an absolute value of a difference between the third spacing and the fourth spacing is less than 4 mm; and/or in the first direction, a minimum spacing between the second end and the first side edge is a fifth spacing, a minimum spacing between the second end and the second side edge is a sixth spacing, and an absolute value of a difference between the fifth spacing and the sixth spacing is less than 4 mm. In this way, since the absolute value of the difference between the third spacing and the fourth spacing is less than 4 mm, when the bending stress is generated at the tab portion, it is possible to prevent the creases from being formed at a part of the tab portion located between the first end and the first side edge. Meanwhile, it is possible to avoid the creases from being formed at a part of the tab portion located between the first side edge and the second side edge. In addition, since the absolute value of the difference between the fifth spacing and the sixth spacing is less than 4 mm, when the bending stress is generated at the tab portion, it is possible to prevent the creases from being generated at a part of the tab portion located between the second end and the first side edge. Meanwhile, it is possible to avoid the creases from being formed at a part of the tab portion located between the second end and the second side edge. When the absolute value of the difference between the third spacing and the fourth spacing is less than 4 mm, and the absolute value of the difference between the fifth spacing and the sixth spacing is less than 4 mm, it is possible to prevent the creases from being formed at the tab portion at two sides of the opening.

In some embodiments, a plurality of tab portions is provided and arranged at one side of the body portion in the first direction. Each of the plurality of tab portions has a first side edge and a second side edge opposite to the first side edge in the first direction. A minimum spacing between the opening and the first side edge in the first direction is a seventh spacing. At least two of the plurality of tabs have different seventh spacings. In this way, after the plurality of tab portions is sequentially stacked in the thickness direction of the tab portion, the openings at the plurality of tab portions are staggered in the thickness direction of the tab portion. Therefore, after the plurality of tab portions is stacked together, an influence of the opening on an overcurrent area of the tab portion is avoided.

In some embodiments, the opening is a cutout.

In some embodiments, the opening is a notch formed by removing a part of the tab portion.

In some embodiments, the first end and/or the second end has an arc-shaped wall surface. Therefore, when the tab portion is deformed, it is possible to prevent a stress concentration region from being formed at the first end and/or the second end of the tab portion, thereby affecting the rigidity of the tab portion.

In some embodiments, a width of the notch at any position on the predetermined path is less than or equal to 5 mm. In this way, it is possible to prevent a dimension of the notch from being too large, which would affect the overcurrent area of the tab portion.

In some embodiments, the tab portion is arranged on at least one side of the body portion in the first direction. For each of the plurality of tab portions, a plurality of openings is provided and arranged at intervals in the first direction.

In a second aspect, embodiments of the present disclosure provide an electrode assembly. The electrode assembly includes a first electrode plate, a second electrode plate, and an insulation member. The first electrode plate and/or the second electrode plate is the electrode plate as described in the above embodiments. The insulation member is arranged between the first electrode plate and the second electrode plate.

In a third aspect, embodiments of the present disclosure provide a battery cell. The battery cell includes a housing having an accommodation cavity, and the electrode assembly as described in the above embodiments. The electrode assembly is arranged in the accommodating cavity.

In a fourth aspect, embodiments of the present disclosure provide a battery. The battery includes the battery cell as described in the above embodiments.

In a fifth aspect, embodiments of the present disclosure provide an electric device. The electric device includes the battery as described in the above embodiments. The battery is configured to supply electrical energy.

The above description is merely an overview of the technical solutions of the present disclosure. To facilitate a clear understanding of technical approaches of the present disclosure, the technical solutions can be performed in accordance with the contents of the specification. Meanwhile, to clarify and explain the above and other objects, features, and advantages of the present disclosure, specific implementations of the present disclosure will be described below.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals. In the accompanying drawings:
FIG. 1 is a schematic structural view of an electric device according to some embodiments of the present disclosure.
FIG. 2 is an exploded view of a battery according to some embodiments of the present disclosure.
FIG. 3 is a schematic structural exploded view of a battery cell according to some embodiments of the present disclosure.
FIG. 4 is a schematic structural view of an electrode plate according to some embodiments of the present disclosure.
FIG. 5 is a schematic structural view of another electrode plate according to some embodiments of the present disclosure.
FIG. 6 is an enlarged view of part A of FIG. 5.
FIG. 7 is a schematic structural view of an electrode plate according to some embodiments of the present disclosure.
FIG. 8 is a schematic structural view of another electrode plate according to some embodiments of the present disclosure.
FIG. 9 is a schematic structural view of an electrode plate according to some embodiments of the present disclosure.
FIG. 10 is a schematic structural view of another electrode plate according to some embodiments of the present disclosure.

Reference numerals in the detailed description are as follows:
vehicle 1000; battery 1100; case 1110; first portion 1111; second portion 1112; battery cell 1120; end cover 1121; electrode terminal 1121a; housing 1122; cell assembly 1123; controller 1200; motor 1300;
body portion 110;
tab portion 120; first side edge 121; second side edge 122;
opening 130; first end 131; second end 132.

### DETAILED DESCRIPTION OF THE EMBODIMENTS

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including," "having," and any variations thereof in the specification, claims, and accompanying drawings of the present disclosure are intended to cover non-exclusive inclusions.

In the description of the embodiments of the present disclosure, the technical terms "first," "second," etc. are used to distinguish different objects, and cannot be understood as indicating or implying relative importance or implicitly specifying a number, a particular order, or a primary or secondary relationship of the indicated technical features.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In the description of the embodiments of the present disclosure, unless otherwise clearly specified and limited, technical terms such as "install," "connect," "connect to," "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances. The specific embodiments described herein are only used to explain, rather than to limit, the present disclosure.

Currently, from the development of the market situation, the application of a power battery is more and more extensive. The power battery is not only used in energy storage power systems such as hydro power, firepower, wind power and solar power stations, but also widely used in electric bicycles, electric motorcycles, electric vehicles and other electric vehicles, as well as military equipment and aerospace. With the continuous expansion of the power battery application field, the market demand is also constantly expanding.

To make the capacity of the battery larger and the safety performance of the battery higher, the battery is usually formed by a plurality of battery cells in series/parallel.

It has been found that during the manufacturing of the electrode plate in the battery cell, when the tab portion of the electrode plate passes through the roller, a folding stress is generated at the tab portion under a combined action of a centrifugal force and an air resistance during a high-speed movement, which enables that the tab portion is prone to be folded. In addition, when the tab portion is folded, the welding area of the tab portion will be reduced, resulting in a large reduction in the overcurrent area of the tab portion. Therefore, the battery cell using the electrode plate generates a large amount of heat during charging or discharging, resulting in a reduction in the safety performance of the battery cell. In addition, the tab portion of the electrode plate is flattened before passing through the roller, and the tab portion is curved after passing through the roller. That is, the tab portion of the electrode plate is changed from a flattened shape to a curved shape after passing through the roller, which enables the bending stress to be generated at the tab portion of the electrode plate. As a result, creases are easily formed at the surface of the tab portion. Additionally, when the tab portion is folded, if the tab portion overlaps with the body portion of the electrode plate, the battery cell capacity will be reduced, and the battery cell will be easily short-circuited.

In order to reduce the occurrence of the folding of the tab portion and avoid the formation of the creases at the tab portion during the manufacturing of the electrode plate, it has been found that an opening penetrating the tab portion can be formed at the tab portion, and the opening has a first end and a second end. The first end and the second end are sequentially located away from the body portion, and the opening extends from the first end to the second end along a predetermined path. Therefore, when the electrode plate passes through the roller, if the the folding stress is generated at the tab portion, different parts of the tab portion located at two sides of the opening can be elastically deformed to different degrees to release the folding stress, thereby reducing the occurrence of the folding of the tab portion. In this way, an insufficient overcurrent area of the tab portion can be avoided. As a result, it is possible to reduce heat generated by the tab portion when the battery cell using the electrode plate is charged or discharged, thereby improving the safety performance of the battery cell. Further, when the tab portion is changed from the flattened shape to the curved shape, the tab portion can also be elastically deformed at the opening to release a bending stress, thereby avoiding creases from being formed at the surface of the tab portion. In addition, when the occurrence of the folding of the tab portion is reduced, it is possible to prevent the tab portion and the body portion of the electrode plate from overlapping with each other. As a result, it is possible to prevent the capacity of the battery cell from being reduced and to reduce the probability of the short circuit of the battery cell.

In view of the above, in order to reduce the occurrence of the folding of the tab portion and avoid the formation of the creases at the tab portion to improve the safety performance of the battery cell using the electrode plate, an electrode plate has been designed through research. The electrode plate includes a body portion, a tab portion, and an opening. The body portion has a surface at least partially coated with an active material. The tab portion is arranged on at least one side of the body portion and connected to the body portion. The opening penetrates the tab portion in a thickness direction of the tab portion, and has a first end and a second end that are sequentially arranged away from the body portion. The opening extends from the first end to the second end along a predetermined path. Therefore, during manufacturing of the electrode plate, the tab portion can be elastically deformed at the opening, thereby reducing the occurrence of the folding of the tab portion. In this way, the insufficient overcurrent area of the tab portion can be avoided. As a result, the heat generated by the tab portion can be reduced when the battery cell using the electrode plate is charged or discharged, thereby improving the safety performance of the battery cell. Further, the bending stress at the surface of the tab portion can also be released at the opening to avoid the creases from being formed at the surface of the tab portion. In addition, when the occurrence of the folding of the tab portion is reduced, the tab portion and the body portion of the electrode plate can be prevented from overlapping with each other. Therefore, it is possible to prevent the capacity of the battery cell from being reduced and to reduce the probability of the short circuit of the battery cell.

Embodiments of the present disclosure provide an electric device with a battery as a power source. The electric device may be, but is not limited to, a mobile phone, a tablet, a notebook computer, an electric toy, an electric tool, a battery car, an electric automobile, a ship, a spacecraft, and the like. The battery has a battery cell, and the battery cell has an electrode plate according to the embodiments of the present disclosure.

The electric toy may include stationary or mobile electric toy such as a game machine, an electric car toy, an electric boar or ship toy, an electric airplane toy, and the like. The spacecraft may include airplanes, rockets, space shuttles, and spacecraft, and the like.

The following embodiments are illustrated for convenience of illustration, taking an electric device of an embodiment of the present disclosure as a vehicle 1000 as an example.

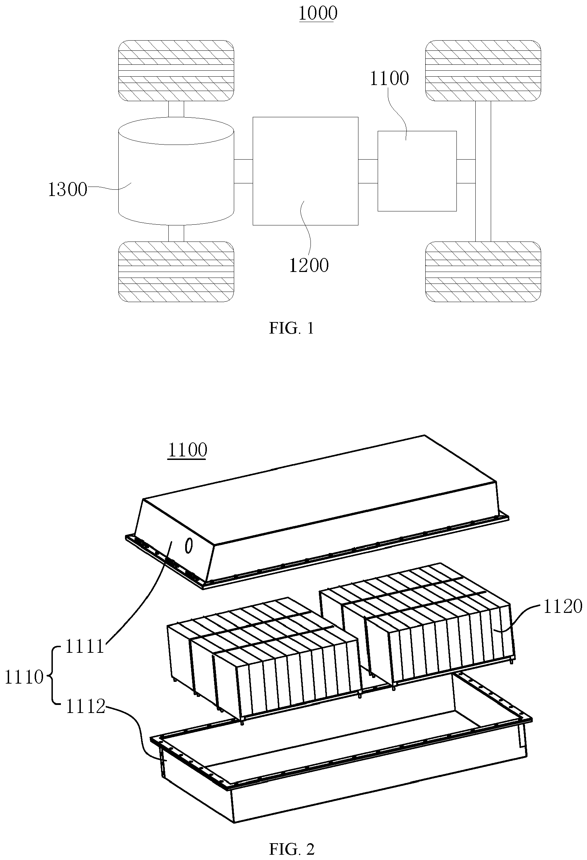

Referring to FIG. 1, the vehicle 1000 may be a fuel vehicle, a gas vehicle, or a new energy vehicle. The new energy vehicle may be a purely electric vehicle, a hybrid vehicle, or a supercharged programmable vehicle, etc. The vehicle 1000 is internally provided with a battery 1100, and the battery 1100 may be disposed at a bottom or a head or a tail of the vehicle 1000. The battery 1100 may be configured for power supply of the vehicle 1000. For example, the battery 1100 may be used as a power source for operation of the vehicle 1000. The vehicle 1000 may also include a controller 1200 and a motor 1300. The controller 1200 is used to control the battery 1100 to power the motor 1300. For example, the controller 120 is used to power the vehicle 1000 for operational power requirements for starting, navigating, and traveling.

In some embodiments of the present disclosure, the battery 1100 may not only serve as an operating power source of the vehicle 1000, but may also serve as a driving power source of the vehicle 1000, to provide drive power for the vehicle 1000 instead of or partially instead of fuel oil or natural gas.

FIG. 2 is an exploded view of the battery 1100 according to some embodiments of the present disclosure. Referring to FIG. 2, the battery 1100 includes a case 1110 and a battery cell 1120. The battery cell 1120 is accommodated in the case 1110. The case 1110 is configured to provide an accommodation space for the battery cell 1120, and may be of various structures.

In some embodiments, the case 1110 may include a first portion 1111 and a second portion 1112. The first portion 1111 and the second portion 1112 cover each other, and together define an accommodation space for the battery cell 1120. The second portion 1112 may be a hollow structure having an opening at an end, and the first portion 1111 may be a plate-like structure. The first portion 1111 covers an opening side of the second portion 1112, allowing the first portion 1111 and the second portion 1112 to together define the accommodating space. Each of the first portion 1111 and the second portion 1112 may be a hollow structure having an opening at one end. An opening side of the first portion 1111 covers the opening side of the second portion 1112. Of course, the case 1110 formed by the first portion 1111 and the second portion 1112 may have various shapes, such as a cylinder, a cuboid, etc.

In the battery 1100, a plurality of battery cells 1120 may be provided, and the plurality of battery cells 1120 may be connected in series or in parallel or in hybrid connection. The hybrid connection refers to that the plurality of battery cells 1120 is connected in series and in parallel. The plurality of battery cells 1120 may be directly connected in series or in parallel or in hybrid connection, and then a structure formed by the plurality of battery cells 1120 is accommodated in the case 1110 as a whole. Of course, the battery 1100 may also be formed by the plurality of battery cells 1120 first connected in series or in parallel or in hybrid connection together to form a battery module, and a plurality of battery modules is then connected in series or in parallel or in hybrid connection to form a structure accommodated in the case 1110 as a whole. The battery 1100 may also have other structures. For example, the battery 1100 may also have a current collecting component configured to realize an electrical connection between the plurality of battery cells 1120.

Each of the plurality of battery cells 1120 may be a secondary battery or a primary battery, and may also be a lithium sulfur battery, a sodium ion battery, or a magnesium ion battery, and the present disclosure is not limited in this regard. The battery cell 1120 may be a cylindrical, flat, cuboid or other shape.

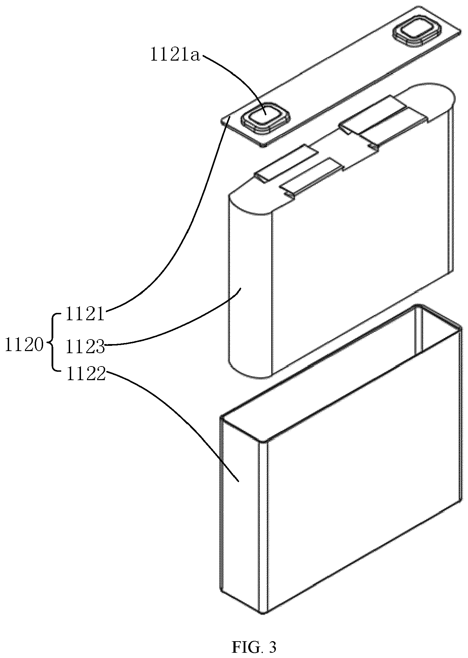

Referring to FIG. 3, the battery cell 1120 refers to a smallest unit that composes the battery. As shown in FIG. 3, the battery cell 1120 includes an end cover 1121, a housing 1122, a cell assembly 1123, and other functional components.

The end cover 1121 is a component covering an opening of the housing 1122 to insulate an internal environment of the battery cell 1120 from an external environment. Without limitation, a shape of the end cover 1121 may be adapted to a shape of the housing 1122 to match with the housing 1122. In some embodiments, the end cover 1121 may be made of a material with predetermined hardness and strength (e.g., an aluminum alloy). In this way, the end cover 1121 is less prone to be deformed when subjected to pressing and collision. As a result, the battery cell 1120 has a higher structural strength, and the safety performance can also be improved. The end cover 1121 may be provided with functional components such as an electrode terminal 1121a. The electrode terminal 1121a is configured to be electrically connected to the cell assembly 1123 for outputting or inputting electrical energy from the battery cell 1120. In some embodiments, the end cover 1121 may also be provided with a pressure relief mechanism configured to release an internal pressure of the battery cell 1120 when the internal pressure or a temperature of the battery cell 1120 reaches a threshold. The end cover 1121 may also be made of various materials, such as copper, iron, aluminum, stainless steel, aluminum alloy, plastic, etc., which is not limited by embodiments of the present disclosure. In some embodiments, an insulation member may also be arranged at an inner side of the end cover 1121. The insulation member is configured to isolate electrical connection components in the housing 1122 from the end cover 1121 to reduce a risk of the short circuit. Illustratively, the insulation member may be plastic, rubber, or the like.

The housing 1122 is a component configured to cooperate with the end cover 1121 to form the internal environment of the battery cell 1120. The formed internal environment can be used to accommodate the cell assembly 1123, an electrolyte, and other components. The housing 1122 and the end cover 1121 may be independent components, and an opening may be formed at the housing 1122. The internal environment of the battery cell 1120 may be formed by closing the opening with the end cover 1121 at the opening. Without limitation, the end cover 1121 and the housing 1122 may also be formed integrally. In an exemplary embodiment, the end cover 1121 and the housing 1122 may form a common connection surface before other components are inserted into the housing. When it is necessary to seal an interior of the housing 1122, the end cover 1121 may cover the housing 1122. The housing 1122 may be of various shapes and various size, such as cuboid, cylindrical, hexagonal prism, etc. In an exemplary embodiment, the shape of the housing 1122 may be determined based on a specific shape and size of the cell assembly 1123. The housing 1122 may be made of various materials, such as copper, iron, aluminum, stainless steel, aluminum alloy, plastic, etc., which is not limited in the embodiments of the present disclosure.

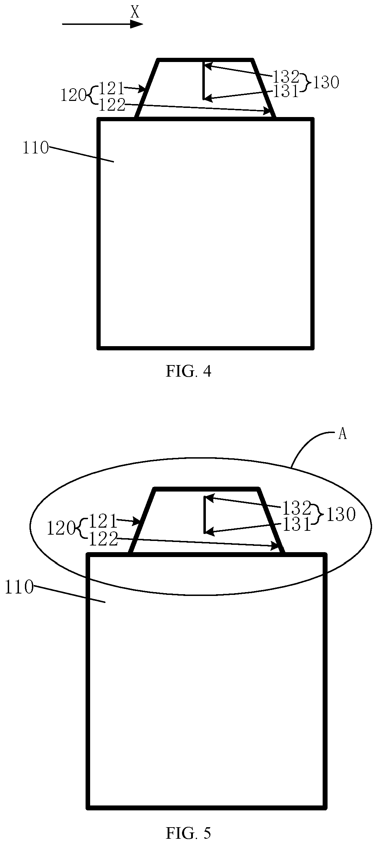

The cell assembly 1123 is a component in which an electrochemical reaction occurs in the battery cell 1120. The housing 1122 may have one or more cell assemblies 1123. The cell assembly 1123 includes a first electrode plate, a second electrode plate, and an insulation member arranged between the first electrode plate and the second electrode plate. The first electrode plate is a positive electrode plate, and the second electrode plate is a negative electrode plate. Referring to FIG. 4 to FIG. 10, according to some embodiments of the present disclosure, the first electrode plate and/or the second electrode plate includes a body portion 110 having a surface at least partially coated with an active material; a tab portion 120 arranged on at least one side of the body portion 110 and connected to the body portion 110; and an opening 130 penetrating the tab portion 120 in a thickness direction of the tab portion 120. The opening has a first end 131 and a second end 132 that are sequentially arranged away from the body portion 110. The opening 130 extends from the first end 131 to the second end 132 along a predetermined path.

In an embodiment, the first electrode plate includes the body portion 110, the tab portion 120, and the opening 130. In this case, during manufacturing of the first electrode plate, a probability in which the tab portion 120 of the first electrode plate is folded can be reduced.

In another embodiment, the second electrode plate includes the body portion 110, the tab portion 120, and the opening 130. In this case, during manufacturing of the second electrode plate, a probability in which the tab portion 120 of the second electrode plate is folded can be reduced.

In another embodiment, each of the first electrode plate and the second electrode plate each includes the body portion 110, the tab portion 120, and the opening 130. In this case, during manufacturing of the first electrode plate and the second electrode plate, the probability in which the tab portion 120 of the first electrode plate and the tab portion 120 of the second electrode plate are folded can be reduced.

The body portion 110 refers to a part of the electrode plate other than the tab portion 120. The body portion 110 is configured to contact the electrolyte in the battery cell. In an embodiment, the electrode plate is a positive electrode plate, and an active material coated on at least a part of the surface of the body portion 110 is a lithium ion-containing slurry, in which case the body portion 110 may be made of aluminum. In a further embodiment, the electrode plate is a negative electrode plate, and an active material coated on at least a part of the surface of the body portion 110 is a lithium ion-containing slurry, in which case the body portion 110 may be made of aluminum.

When a plurality of tab portions 120 is provided, the plurality of tab portions 120 may be arranged on at least one side of the body portion 110. The plurality of tab portions 120 may be arranged on one side of the body portion 110, or the plurality of tab portions 120 may be arranged on two opposite sides of the body portion 110, and the present disclosure is not limited in this regard.

The tab portion 120 is connected to the body portion 110. Therefore, after electrically connecting the tab portion 120 to other devices, the tab portion 120 can transfer a current generated by the body portion 110 to other devices. In an embodiment, the tab portion 120 is electrically connected to other devices through welding.

A shape of the tab portion 120 may be rectangular, trapezoidal, etc., which is not limited by the present disclosure.

It should be noted that a shape of the predetermined path may be a straight line shape, a folded line shape, a curved line shape, etc., which is not limited herein.

In some embodiments, in order to facilitate the manufacturing of the electrode plate, the in any electrode plate, tab portion 120 and the body portion 110 are made of a same material. The tab portion 120 and the body portion 110 are integrally formed.

The opening 130 penetrates the tab portion 120 in the thickness direction of the tab portion 120. In this way, the tab portion 120 can be elastically deformed at the opening 130, and different parts of the tab portion 120 located on two sides of the opening 130 can be elastically deformed to different degrees. Further, since the opening 130 has the first end 131 and the second end 132 that are sequentially arranged away from the body portion 110 and the opening 130 extends from the first end 131 to the second end 132 along the predetermined path, it is also possible to prevent the influence of the opening 130 on the rigidity of the tab portion 120 in a direction away from the body portion 110 while allowing the tab portion 120 to be elastically deformed at the opening 130.

Therefore, when the electrode plate passes through the roller, if the folding stress is generated at the tab portion 20, different parts of the tab portion 20 located on two sides of the opening 130 can be elastically deformed to different degrees to release the folding stress, thereby reducing the occurrence of the folding of the tab portion 120. In this way, an insufficient overcurrent area of the tab portion 120 can be avoided. As a result, heat generated by the tab portion 120 can be reduced when the battery cell using the electrode plate is charged or discharged, thereby improving the safety performance of the battery cell. Moreover, when the tab portion 120 is changed from the flattened shape to the curved shape, the tab portion 120 can also elastically deform at the opening 130 to release the bending stress, thereby avoiding the creases from being formed at the surface of the tab portion 120. In addition, when the occurrence of the folding of the tab portion 120 is reduced, it is possible to prevent the tab portion 120 and the body portion 110 of the electrode plate from overlapping with each other. Therefore, it is possible to prevent the capacity of the battery cell from being reduced and to reduce the probability of the short circuit of the battery cell.

Referring to FIG. 4, FIG. 7, FIG. 9, and FIG. 10, according to some embodiments of the present disclosure, the opening 130 extends to an edge of tab portion 120 away from body portion 110 along the predetermined path.

In this way, a part of the tab portion 120 located on the first end 131 away from the body portion 110 can be more easily be elastically deformed, and different parts of the tab portion 120 located on two sides of the opening 130 can be more easily elastically deformed to different degrees, which further reduces the occurrence of the folding of the tab portion 120 when the electrode plate passes through the roller.

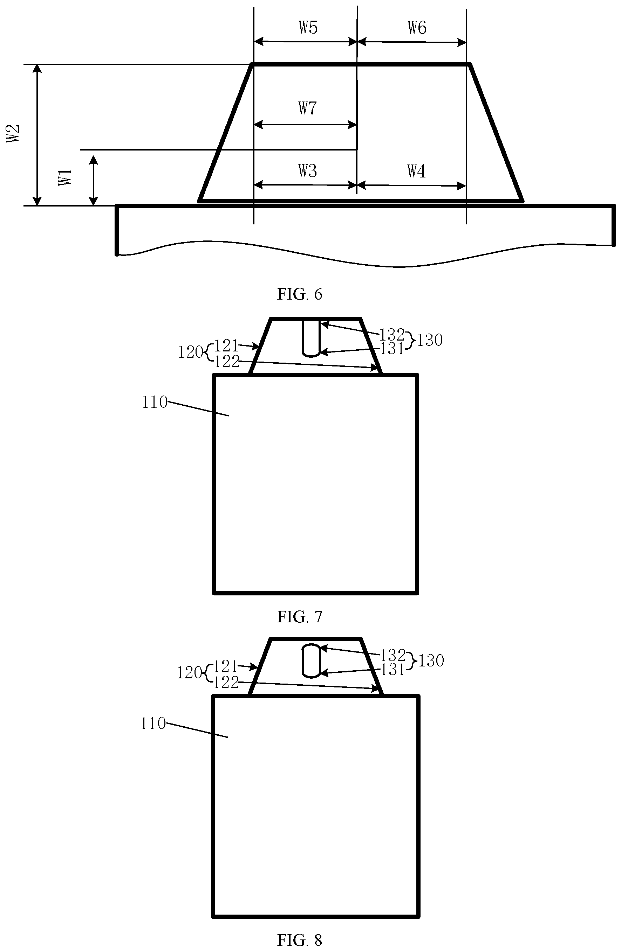

Referring from FIG. 4 to FIG. 10, according to some embodiments of the present disclosure, a first spacing (i.e. W1 in FIG. 6) is formed between the opening 130 and the body portion 110.

In this way, it is possible to prevent a part of the tab portion 120 close to the body portion 110 from being divided into two independent sheets by the opening 130 due to too large opening 130, which would affect the rigidity of the tab portion 120 in the direction away from the body portion 110. Further, it is possible to prevent the tab portion 120 from being easily folded due to the opening 130. Furthermore, when different parts of the tab portion 120 located on two sides of the opening 130 are elastically deformed, a part of the tab portion 120 elastically deformed can be more easily restored its elastic deformation, since the part of the tab portion 120 elastically deformed is connected to the part of the tab portion 120 located on the side of the first end 131 close to the body portion 110. Therefore, the tab portion 120 can be more easily restored to the flattened shape.

Continuing to refer FIG. 4 to FIG. 10, according to some embodiments of the present disclosure, a second spacing (i.e., W2 in FIG. 6) is formed between the edge of the tab portion 120 away from the body portion 110 and the body portion 110. The first spacing is greater than or equal to one quarter of the second spacing and less than or equal to three quarters of the second spacing.

In this way, since the first spacing is greater than or equal to one quarter of the second spacing, it is also possible to prevent the part of the tab portion 120 close to the body portion 110 from being divided into two independent sheets by the opening 130.

In addition, since the first spacing is less than or equal to three quarters of the second spacing, it can be ensured that when the tab portion 120 is subjected to the folding stress and/or the bending stress, the folding stress and/or the bending stress can be released at the opening 130 of the tab portion 120.

Referring from FIG. 4 to FIG. 10, the tab portion 120 is arranged on at least one side of the body portion 110 in a first direction (i.e., the X-direction shown in FIG. 4, FIG. 9, and FIG. 10) according to some embodiments of the present disclosure. The first end 131 and the second end 132 are sequentially arranged in a direction perpendicular to the first direction. In this way, the influence of the opening 130 on the rigidity of the tab portion 120 perpendicular to the first direction can be avoided.

Continuing to refer FIG. 4 to FIG. 10, the predetermined path is perpendicular to the first direction according to some embodiments of the present disclosure. In this way, a dimension of the opening 130 in the first direction can be reduced, avoiding the influence of the opening 130 on the rigidity of the tab portion 120 in the direction perpendicular to the first direction.

Reference is made FIG. 4 to FIG. 9. According to some embodiments of the present disclosure, the tab portion 120 is arranged on at least one side of the body portion 110 in the first direction, and has a first side edge 121 and a second side edge 122 opposite to the first side edge 121 in the first direction. In the first direction, a minimum spacing between the first end 131 and the first side edge 121 is a third spacing (i.e., W3 in FIG. 6), a minimum spacing between the first end 131 and the second side edge 122 is a fourth spacing (i.e., W4 in FIG. 6), and an absolute value of a difference between the third spacing and the fourth spacing is less than 4 mm; and/or in the first direction, a minimum spacing between the second end 132 and the first side edge 121 is a fifth spacing (i.e., W5 in FIG. 6), a minimum spacing between the second end 132 and the second side edge 122 is a sixth spacing (i.e., W6 in FIG. 6), and an absolute value of a difference between the fifth spacing and the sixth spacing is less than 4 mm.

In an embodiment, the absolute value of the difference between the third spacing and the fourth spacing is less than 4 mm. Therefore, when a bending stress is generated at the tab portion 120, the spacing between the first end 131 and the first side edge 121 can be substantially same as the spacing between the first end 131 and the second side edge 122. In this way, it is possible to prevent the creases from being formed at a part of the tab portion 120 between the first end 131 and the first side edge 121 due to an excessive spacing between the first end 131 and the first side edge 121, and to prevent the creases from being formed at a part of the tab portion 120 between the first end 131 and the second side edge 122 due to an excessive spacing between the first end 131 and the second side edge 122.

In another embodiment, the absolute value of the difference between the fifth spacing and the sixth spacing is less than 4 mm. Therefore, when a bending stress is generated at the tab portion 120, the spacing between the second end 132 and the first side edge 121 may be substantially same as the spacing between the second end 132 and the second side edge 122. In this way, it is possible to prevent the creases from being formed at a part of the tab portion 120 between the second end 132 and the first side edge 121, and to prevent the creases from being formed at a part of the tab portion 120 between the second end 132 and the second side edge 122 due to an excessive spacing between the second end 132 and the second side edge 122.

In another embodiment, the absolute value of the difference between the third spacing and the fourth spacing is less than 4 mm, and the absolute value of the difference between the fifth spacing and the sixth spacing is less than 4 mm. In this manner, it is possible to prevent the creases from being formed at the tab portion 120 at two sides of the opening 130. In addition, when the absolute value of the difference between the third spacing and the fourth spacing is less than 4 mm, and the absolute value of the difference between the fifth spacing and the sixth spacing is less than 4 mm, an influence of the opening 130 on the rigidity of the tab portion 120 away from the body portion 110 can also be avoided.

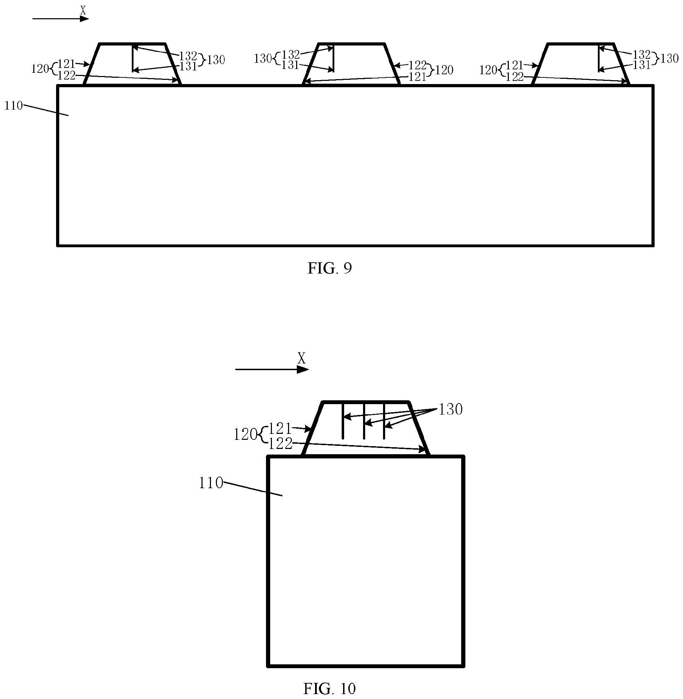

Referring to FIG. 9, according to some embodiments of the present disclosure, the electrode plate includes a plurality of tab portions 120 arranged at one side of the body portion 110 in the first direction. Each of the plurality of tab portions 120 has a first side edge 121 and a second side edge 122 opposite to the first side edge 121 in the first direction. In the first direction, a minimum spacing between the opening 130 and the first side edge 121 is a seventh spacing (i.e., W7 in FIG. 6). At least two of the plurality of tabs have different seventh spacings.

In this way, after the plurality of tab portions 120 is sequentially stacked in the thickness direction of any tab portion 120, the openings 130 at the plurality of tab portions 120 are staggered in the thickness direction of any tab portion 120. Therefore, after the plurality of tab portions 120 is stacked, an influence of the opening 130 on an overcurrent area of the tab portion 120 is avoided.

Reference is made to FIG. 4, FIG. 5, FIG. 9 and FIG. 10. According to some embodiments of the present disclosure, the opening 130 is a cutout. The cutout is a narrow notch formed at the tab portion 120 by cutting the tab portion 120. In this way, it is possible to prevent the overcurrent area of tab portion 120 from being influenced due to a reduction in the area of tab portion 120 by the opening 130.

Referring to FIG. 7 and FIG. 8, according to some embodiments of the present disclosure, the opening 130 is a notch formed by removing a part of the tab portion 120. The notch may be formed by cutting the tab portion 120 and removing the part of the tab portion 120. In this way, it is possible to prevent the tab portion 120 on two sides of the notch from abutting or overlapping with each other, which may influence an effect of the tab portion 120 in releasing the stress at the notch.

Continuing to refer to FIG. 7 and FIG. 8, in some embodiments, the first end 131 and/or the second end 132 has an arc-shaped wall surface. By providing the first end 131 and/or the second end 132 with the arc-shaped wall surface, when the tab portion 120 is deformed, it is possible to prevent stress a concentration area that influences the rigidity of the tab portion 120 from being generated at the tab portion 120 located on the first end 131 and/or the second end 132.

Referring to FIG. 7, in an embodiment, the opening 130 extends to the edge of the tab portion 120 away from the body portion 110 along the predetermined path. The first end 131 has an arc-shaped wall surface. Referring to FIG. 4, in a further embodiment, each of the first end 131 and the second end 132 has an arc-shaped wall surface. In another embodiment, the second end 132 has an arc-shaped wall surface.

Continuing to refer to FIG. 7 and FIG. 8, according to some embodiments of the present disclosure, a width of the notch at any position on the predetermined path is less than or equal to 5 mm. In this way, it is possible to avoid an influence on the overcurrent area of the tab portion 120 due to an oversized notch.

Referring to FIG. 10, according to some embodiments of the present disclosure, the tab portion 120 is arranged on at least one side of the body portion 110 in the first direction. In any tab portion 120, the plurality of openings 130 is provided, and is arranged at intervals in the first direction.

According to some embodiments of the present disclosure, referring from FIG. 1 to FIG. 4, an electrode plate is provided by the present disclosure. The electrode plate includes a body portion 110 having a surface at least partially coated with an active material; a tab portion 120 arranged on at least one side of the body portion 110 and connected to the body portion 110; an opening 130 penetrating the tab portion 120 in a thickness direction of the tab portion 120. The opening has a first end 131 and a second end 132 that are sequentially arranged away from the body portion 110. The opening 130 extends from the first end 131 to the second end 132 along a predetermined path. The second end 132 is located at an edge of the tab portion 120 away from the body portion 110, and the predetermined path is perpendicular to the first direction.

In some embodiments, the first spacing is formed between the opening 130 and the body portion 110, and the second spacing is formed between the edge of the tab portion 120 away from the body portion 110 and the body portion 110. The first spacing is greater than or equal to one quarter of the second spacing, and the first spacing is less than or equal to three quarters of the second spacing.

In some embodiments, the tab portion 120 has the first side edge 121 and the second side edge 122 opposite to the first side edge 121 in the first direction. In the first direction, the minimum spacing between the first end 131 and the first side edge 121 is a third spacing, and a minimum spacing between the first end 131 and the second side edge 122 is a fourth spacing. The absolute value of a difference between the third spacing and the fourth spacing is less than 4 mm.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments or equivalent replacements can be made to some or all of the technical features in the technical solutions described in the foregoing embodiments. These modifications or equivalent replacements, which do not cause the essence of corresponding technical solutions to depart from the scope of the technical solutions of the embodiments of the present disclosure, shall fall within the scope of the claims and the specification of the present disclosure. In particular, the technical features mentioned in each embodiment can be combined arbitrarily without any structural conflict. The present disclosure is not limited to the particular embodiments disclosed herein, and includes all technical solutions falling within the scope of the claims.

## Claims

1. An electrode plate, comprising:
a body portion having a surface at least partially coated with an active material;
a tab portion arranged on at least one side of the body portion and connected to the body portion; and
an opening penetrating the tab portion in a thickness direction of the tab portion, the opening having a first end and a second end that are sequentially arranged away from the body portion, and the opening extending from the first end to the second end along a predetermined path.

2. The electrode plate according to claim 1, wherein the opening extends to an edge of the tab portion away from the body portion along the predetermined path.

3. The electrode plate according to claim 1 or 2, wherein a first spacing is formed between the opening and the body portion.

4. The electrode plate according to claim 3, wherein a second spacing is formed between the edge of the tab portion away from the body portion and the body portion, the first spacing being greater than or equal to one quarter of the second spacing and less than or equal to three quarters of the second spacing.

5. The electrode plate according to any one of claims 1 to 4, wherein:
the tab portion is arranged on at least one side of the body portion in a first direction; and
the first end and the second end are sequentially arranged in a direction perpendicular to the first direction.

6. The electrode plate according to claim 5, wherein the predetermined path is configured to be perpendicular to the first direction.

7. The electrode plate according to any one of claim 1 to 6, wherein:
the tab portion is arranged on at least one side of the body portion in a first direction, and has a first side edge and a second side edge opposite to the first side edge in the first direction;
in the first direction, a minimum spacing between the first end and the first side edge is a third spacing, and a minimum spacing between the first end and the second side edge is a fourth spacing, an absolute value of a difference between the third spacing and the fourth spacing being less than 4 mm; and/or in the first direction, a minimum spacing between the second end and the first side edge is a fifth spacing, and a minimum spacing between the second end and the second side edge is a sixth spacing, an absolute value of a difference between the fifth spacing and the sixth spacing being less than 4 mm.

8. The electrode plate according to any one of claims 1 to 7, wherein:
a plurality of tab portions is provided and arranged at one side of the body portion in the first direction; and
each of the plurality of tab portions has a first side edge and a second side edge opposite to the first side edge in the first direction,
wherein a minimum spacing between the opening and the first side edge in the first direction is a seventh spacing, at least two of the plurality of tabs having different seventh spacings.

9. The electrode plate according to any one of claims 1 to 8, wherein the opening is a cutout.

10. The electrode plate according to any one of claims 1 to 9, wherein the opening is a notch formed by removing a part of the tab portion.

11. The electrode plate according to any one of claims 1 to 10, wherein the first end and/or the second end has an arc-shaped wall surface.

12. The electrode plate according to claim 10, wherein a width of the notch at any position on the predetermined path is less than or equal to 5 mm.

13. The electrode plate according to any one of claims 1 to 12, wherein:
the tab portion is arranged on at least one side of the body portion in a first direction; and
for each of the plurality of tab portions, a plurality of openings is provided and arranged at intervals in the first direction.

14. An electrode assembly, comprising:
a first electrode plate;
a second electrode plate, the first electrode plate and/or the second electrode plate being the electrode plate according to any one of claims 1 to 13; and
an insulation member arranged between the first electrode plate and the second electrode plate.

15. A battery cell, comprising:
a housing having an accommodation cavity; and
the electrode assembly according to claim 14, wherein the electrode assembly is arranged in the accommodating cavity.

16. A battery, comprising the battery cell according to claim 15.

17. An electric device, comprising the battery according to claim 16, wherein the battery is configured to supply electric energy.
